**Europäisches Patentamt**

**European Patent Office**

**Office européen des brevets**

(11) Veröffentlichungsnummer: **0 343 445 B1**

(12) **EUROPÄISCHE PATENTSCHRIFT**

(45) Veröffentlichungstag der Patentschrift: **16.12.92**

(21) Anmeldenummer: **89108541.7**

(22) Anmeldetag: **12.05.89**

(51) Int. Cl.⁵: **B01D 46/42**, B01D 46/12, F24F 13/00

(54) Filtereinheit mit Filteraufnahme und Filterzelle.

(30) Priorität: **21.05.88 DE 3817477**

(43) Veröffentlichungstag der Anmeldung:
**29.11.89 Patentblatt 89/48**

(45) Bekanntmachung des Hinweises auf die Patenterteilung:
**16.12.92 Patentblatt 92/51**

(84) Benannte Vertragsstaaten:
**AT BE CH DE ES IT LI NL**

(56) Entgegenhaltungen:
**FR-A- 2 566 476**
**FR-A- 2 583 147**
**US-A- 4 088 463**
**US-A- 4 175 936**

(73) Patentinhaber: **Kessler & Luch GmbH**
**Rathenaustrasse 8 Postfach 58 10**
**W-6300 Giessen 1(DE)**

(72) Erfinder: **Kohnen, Franz**
**Hagstrasse 14**
**W-6300 Giessen(DE)**
Erfinder: **Schmidt, Uwe, Dr.-Ing.**
**Lerchenweg 2**
**W-3554 Lohra(DE)**

Rank Xerox (UK) Business Services

## Beschreibung

Die Erfindung betrifft eine Filtereinheit, bestehend aus einem Aufnahmerahmen und darin von der Luftaustrittsseite her einsetzbarer Filterzelle, insbesondere für Filterdecken, wobei die Filterzelle einen aus vier Rahmenwänden zusammengefügten Zellenrahmen aufweist, in den ein Filterpack mit Vergußmasse abgedichtet eingesetzt ist und der mit Dichtmitteln und Befestigungsmitteln zum Abdichten gegenüber und zum Befestigen am Aufnahmerahmen versehen ist und wobei der Aufnahmerahmen,in den die Filterzelle mit geringem Spiel einsetzbar ist, mit den Dichtmitteln und den Befestigungsmitteln der Filterzelle zusammenwirkende Dichtungsgegenstücke und Befestigungsgegenlager aufweist.

Raumlufttechnische Anlagen mit endständigen Filtern werden so ausgebildet, daß die in die Filteraufnahmen eingesetzten Filterzellen in einfacher Weise eingebaut und nach Sättigung zum Wechseln wieder entfernt werden kann. Dabei muß die Dichtheit der mit Dichtmitteln versehenen in den Aufnahmerahmen eingesetzte Filterzelle gewährleistet bleiben. Beim Zusammensetzen derartiger Filtereinheiten zu kompletten Filterwänden oder Filterdecken kommt es darauf an, daß die Fläche möglichst vollkommen genutzt wird, so daß die Stege zwischen den Filtereinheiten möglichst schmal sind. Nur dadurch kann die in der Reinraumtechnik notwendige horizontale oder vertikale Durchflutung des Raumes mit ausgeglichenem Geschwindigkeitsprofil über den gesamten Raumquerschnitt hinweg erreicht werden. Aus der Reinraumtechnik ist bekannt, daß zur Aufnahme der Filterzellen Rahmenwerke eingebaut werden, wobei die Filterzellen gegen an den Rahmen befindliche Flansche gedrückt werden und zwar mittels im Rahmenprofil vorgesehener Spannvorrichtungen. Dadurch ergeben sich erhebliche (und für die Reinraumtechnik nur schwer tollerierbare) Stegbreiten, deren Strömungsschatten das gewünschte homogene Strömungsbild stört. Um die mechanisch nicht einfach herzustellenden und nicht einfach zu bedienenden Spannvorrichtungen zu ersetzen wurden die Aufnahmerahmen mit Dichtrinnen versehen, in die an der Filterzelle vorgesehene, in Luftströmungsrichtung weisende Dichtkragen eintauchen. Durch das Füllen der Rinnen mit zähen Flüssigkeiten oder mit unter Normaltemperatur erstarrenden Flüssigkeiten (die beim Einsetzen der Filterzelle über den Schmelzpunkt erhitzt wird) gelingt es das Gewicht der Filterzelle im Grund der Dichtrinne abzustützen und gleichzeitig eine Abdichtung im Sinne eines Tauchverschlusses zu erreichen. Nachteilig dabei ist, daß der Dichtkragen das Maß der Filterzelle überragt und daß die am Trägerprofil vorgesehenen Dichtrinnen dieses ihrerseits verbreitern. Hinzu kommt, daß wegen des Dichtkragens der Einbau der Filterzelle nur von der Luft-Zuströmseite - also bei Filterdecken von oben - erfolgen kann, was einen hinreichenden Raum auf der Luft-Zuströmseite voraussetzt. Hier setzt die Erfindung ein, der die Aufgabe zugrunde liegt eine Filtereinheit der genannten Gattung so weiterzubilden, daß ein Einsetzen von der Luftabströmrichtung her möglich ist, daß die notwendige Abdichtung der eingesetzten Filterzelle sichergestellt ist und daß das Einsetzen und das Entnehmen bzw. das Wechseln der Filterzellen in einfacher Weise erfolgen kann.

Diese Aufgabe wird nach der Erfindung durch die im Kennzeichen des Hauptanspruchs wiedergegebenen Merkmale gelöst; die Merkmale vorteilhafter Weiterbildungen und bevorzugter Ausführungsformen enthalten die Unteransprüche.

Durch die vorgeschlagene Ausbildung der Filterzelle wird erreicht, daß die Außenwand des Zellenrahmens nicht durch eine Dichtung oder durch Dichteinrichtungen nach außen überragt wird, vielmehr schließt die Dichtung bündig mit der Außenwand des Zellenrahmens ab. Dies ermöglicht das Einsetzen der Filterzelle in den Aufnahmerahmen von der Luftaustrittsseite her. Bei den gebräuchlichen Dichtungen können (relativ) große Spannwege überbrückt werden. Daher ist die einfache Befestigung der Filterzelle mittels steckbarer Elemente eine sehr einfache und wirkungsvolle Befestigung, zumal die überragenden Enden der Steckelemente lediglich eine Abstützkante benötigen. Derartige Steckelemente vergrößern im Gegensatz zu herkömmlichen Spanneinrichtungen die notwendige Breite des Aufnahmerahmens nicht, so daß der Aufnahmerahmen sehr schmal gehalten werden kann. Bei kleineren Filterzellen genügt es, wenn die längeren Rahmenwände je eine Durchstecköffnung nahe den Filterzellen-Kanten aufweisen, so daß vier Steckelemente gesetzt werden können. Andere Anordnungen der Steckelemente sind selbstverständlich möglich, so auch zusätzliche Steckelemente zwischen den beiden,oder zusätzliche Steckelemente die durch Öffnungen in den kürzeren der Rahmenwände gesteckt werden. Wird als umlaufende Dichtung ein Profilstreifen eines elastischen Materials genommen, kann dies direkt gegen den rechtwinklig zur Luftstromrichtung stehenden Dichtflansch angedrückt werden. Es versteht sich von selbst, daß hierbei der Abstand zwischen Oberkante Dichtung und Unterkante Öffnung für die Steckelemente geringfügig größer ist als der Abstand zwischen Auflagekante für die Steckelemte und Anlageseite für die Dichtung am Dichtflansch. So ist sichergestellt, daß die Dichtung der Filterzelle immer unter hinreichender Spannung am Dichtflansch anliegt. Eine Umkantung am Dichtflansch in Luftstromrichtung führt zu einem Dichtkrägen, der auf dem Profilstreifen aufliegt und der bei gleicher Andrückkraft wegen geringerer Fläche einen größeren Anpreßdruck zur Folge hat und somit die Abdichtung verbessert. Gleiches kann auch erreicht werden, wenn der Profilstreifen für die Dichtung die Form eines Dachprofils aufweist, wobei die dem Dachfirst entsprechende Linie im Sinne der umlaufenden Dichtung eine umlaufende Linie ist.

In einer anderen Ausführungsform ist die umlaufende Dichtung als Filterrinne ausgebildet, in die eine zähe oder eine erstarrte Flüssigkeit eingefüllt ist. Am Aufnahmerahmen ist ein gegen den Aufnahmerahmen abgedichteter Dichtflansch vorgesehen, der rechtwinklig zur Luftströmungsrichtung ausgerichtet am freien Ende einen in Luftströmungsrichtung umgekanteten Dichtkragen aufweist, der entsprechend der Tiefe der Dichtrinne verlängert ist und in die zähe bzw. erstarrte Flüssigkeit dichtend abgetaucht ist. Es versteht sich von selbst, daß bei erstarrenden Massen diese zum Einbringen der Dichtung verflüssigt werden müssen, zweckmäßigerweise werden schmelzfähige Massen genommen, die nach Erwärmen aufgeschmolzen das Einsetzen der Filterzelle erlauben und die nach dem Einsetzen durch Erkalten erstarren. Diese Ausführungsform eignet sich im Zusammenwirken mit den Steckelementen besonders gut, da die Abtauchtiefe hinreichend groß gewählt werden kann und so an die Genauigkeit der Vorfertigung in Bezug auf die Lage der Auflagekanten bzw. der Öffnungen für die Steckverbinder keine übermäßigen Anforderungen gestellt werden müssen. Diese Ausführungsform ist wegen der Notwendigkeit des Umgangs mit flüssiger bzw. zum Einsetzen zu verflüssigender Dichtmasse auf die Anwendung im Bereich der Filterdecken beschränkt.

Zur Befestigung der Filterzellen im Aufnahmerahmen können sie sowohl flachschieberartige als auch bolzenförmige Steckglieder aufweisen, wobei ein sicherer Sitz durch eine Nut bewirkt wird, in die die Abstützkante eingreift. Bolzenförmige Steckelemente haben darüber hinaus den Vorteil, daß der im Grund der Nut verbleibende Kern exzentrisch angeordnet sein kann, so daß durch Verdrehen des Bolzens ein Heben bzw. Senken der Filterzelle bewirkt wird in den Grenzen der Exzentrizität (die jedoch im allgemeinen ausreichen um bei Profilstreifen-Dichtungen aus elastischem Material einwandfreie Abdichtung zu erreichen). Vorteilhaft ist es darüber hinaus, wenn der Spalt zwischen Außenseite des Filterzellenrahmens und Innenseite des Aufnahmerahmens vorzugsweise zwischen den Öffnungen zum Durchstecken der Steckelemente und der Luftaustrittsseite eine Dichtung angeordnet ist. Dazu wird in dem Filterzellenrahmen zwischen den Durchsecköffnungen und der der Luftaustrittsseite zugeordneten Kante der Rahmenwände eine Nut vorgesehen, in die diese Dichtung eingeschoben werden kann. Dieser Verschluß ist insbesondere für reinraumtechnische Belange von Bedeutung, da dort das Bestreben dahin geht alle Toträume als "Partikel-Reservoirs" zu minimieren und unvermeidbare Hohlräume mittels Dichtungen zu schließen.

Die eingesetzten Steckverbinder können auch hakenförmige Halteelemente aufnehmen. Diese aus Flachmaterial gefertigten Haken könnten so dünn gehalten sein, daß sie auch nachträglich in den vorhandenen Spalt zwischen Zellenrahmen und Aufnahmerahmen eingeschoben und am Steckverbinder eingehakt werden. Das freie Ende dient zur Aufnahme von Sichtschutzgittern, Strömungs-Gleichrichtern o.dgl., es kann dazu um 90° umgebogen sein. Es versteht sich von selbst, daß diese Hakenelemente auch für alle möglich anderen Versorgungs- und Einrichtungsmittel sein können.

Für eine Filtereinheit zur Bildung einer Filterdecke auf einem Raster von abgehängten Aufnahmeprofilen mit Dichtrinne wird ein Aufnahmegehäuse vorgesehen, dessen umlaufende Außenwand in den umlaufenden Dichtrinnen der Aufnahmeprofile eines Feldes der Filterdecke abgetaucht sind und an den ein rechtwinklig zur Luftströmungsrichtung befindlicher Flansch angeordnet ist, der seinerseits den in Luftströmungsrichtung weisenden Dichtkragen trägt, der mit der umlaufenden Dichtung der Filterzelle zusammenwirkt. Dabei kann in einfacher Weise die freie Kante der Dichtrinne des Aufnahmeprofils als Auflagekante für die Steckverbinder benutzt werden. Um in besonderen Fällen eine feldweise Luftversorgung derartiger Decken zu ermöglichen wird das zusätzliche Aufnahmegehäuse mit einer Platte verschlossen, die vorzugsweise zentral angeordnet eine Einlaufdüse zum Verbinden mit einer Luftversorgungs-Leitung aufweist.

Das Wesen der Erfindung wird beispielhaft an den schematisch dargestellten Ausführungsbeispielen gemäß Figuren 1 bis 8 dargestellt; dabei zeigen

Fig. 1 eine Filteraufnahme mit eingesetzter Filterzelle mit auflaufendem Dichtungsprofil,

Fig. 2 eine Filteraufnahme mit eingesetzter Filterzelle mit Dichtrinne,

Fig. 3 eine mit abgehängten Filterprofilen zusammenwirkende Filteraufnahme mit Luftanschlußstutzen,

Fig. 4 eine Filterzelle,

Fig. 5 Einzelheit einer Filterzelle - Zellenwandausbildung mit eingesetzter Filterzelle,

Fig. 6 Einzelheit einer Filterzelle-Eckverbindung der Zellenwände,

Fig. 7 Einzelheit Steckbolzen zum Verbinden von Filterzelle mit Filteraufnahme,

Fig. 8 Befestigungshaken

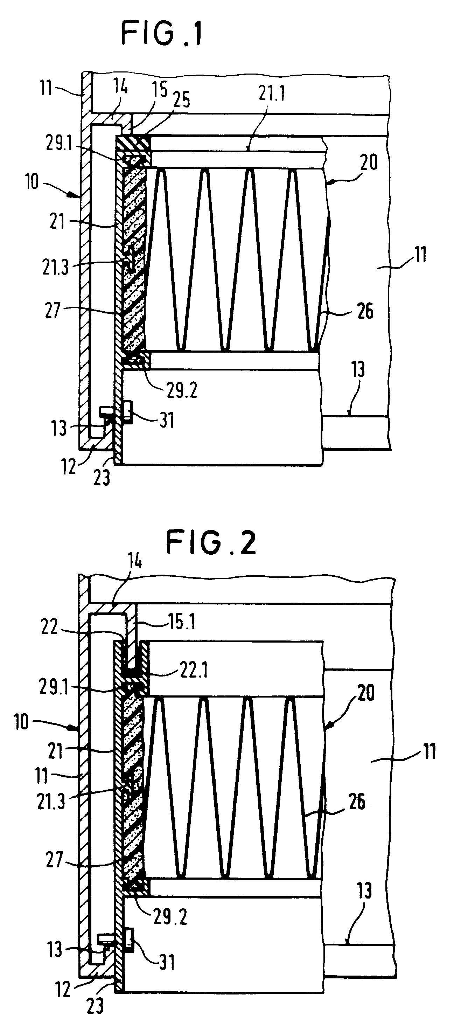

Die Fig. 1 und 2 zeigen eine in eine Filteraufnahme 10 eingesetzte Filterzelle 20. Die Filteraufnahme selbst besteht aus den Aufnahmewänden 11, die die Filterzelle mit Spiel umgeben. An den Aufnahmewänden 11 sind obere Flansche 14 und untere Flansche 12 angeordnet, zwischen denen die Filterzelle abgedichtet gehalten ist. Der untere Flansch 12 weist dabei eine nach oben gerichtete Kante 13 auf, auf die sich ein Steckelement 31 abstützt, das durch die abströmseitige Verlängerung 23 der Zellenseitenwand 21 geführt ist und daß das Filter mit der Filteraufnahme verbindet. Die lufteintrittsseitige Stirnseite 21.1 der eingesetzten Filterzelle 20 ist mit einer umlaufenden Profildichtung 25 versehen, die sich gegen die ihr zugeordnete Flanschseite des oberen Flansches 14 legt. Zur Verbesserung der Abdichtung kann dieser Flansch mit einem Dichtkragen 15 versehen sein, der die Auflagefläche begrenzt und so bei gleicher Kraft einen erhöhten Dichtdruck erzeugt. Die Zellenseitenwand 21 weist darüber hinaus ein oberes und ein unteres Filterpacklager 29.1 und 29.2 auf; zwischen diesen beiden Lagern ist das Filterpack 26 gehalten und mit der Vergußmasse 27 gegenüber den aus den Zellenseitenwänden 21 gebildeten Zellenrahmen gedichtet. Zur Verankerung kann die Zellenseitenwand 21 eine Verstärkungsleiste 21.3 aufweisen, die T-förmig ausgebildet durch die Vergußmasse 27 hintergriffen wird. Hinter der Filterzelle erstreckt sich wiederum die Aufnahmewand 11 des Aufnahmerahmens für die Filterzelle, mit dem Dichtkragen 15 und der Auflagekante 13 für die Steckelemente 31.

Die in Fig. 2 dargestellte Variante hat eine andere Dichtung: Hier ist der Dichtkragen der Filteraufnahme 10 als verlängerter Dichtkragen 15.1 ausgeführt und die umlaufende Dichtung der Filterzelle 20 als umlaufende Rinne 22, die mit einem zähflüssigen oder erstarrenden Dichtmittel 22.1 gefüllt ist. In dieses Dichtmittel 22.1 ist der verlängerte Dichtkragen 15.1 abgetaucht. Dies ist bei zähflüssigen Dichtmitteln 22.1 ohne weiteres möglich, bei erstarrten Dichtmitteln werden diese zum Einsetzen und zum Entfernen der Zelle kurzzeitig über ihren Schmelzpunkt erhitzt, so daß auch hier das Eintauchen bzw. Entnehmen vorgenommen werden kann.

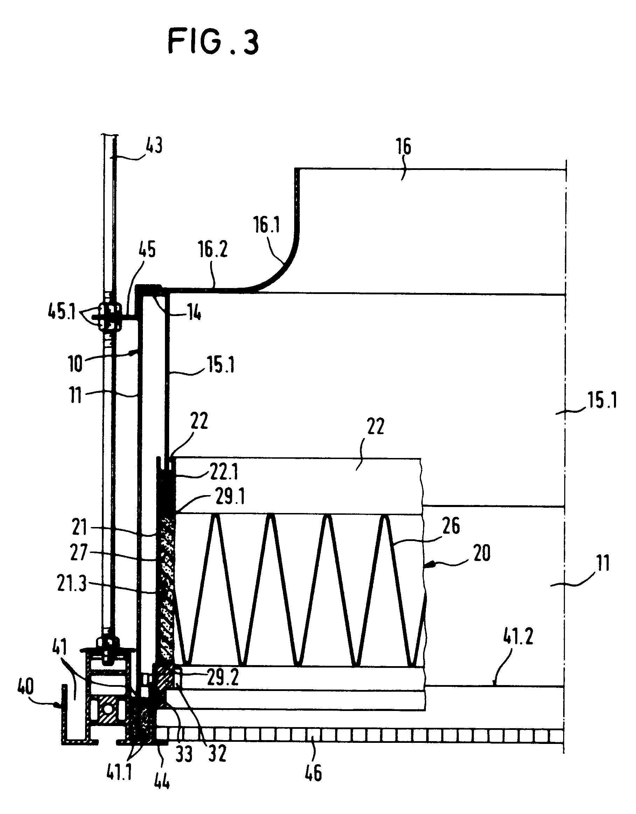

Die Fig. 3 zeigt eine Variante, bei der ein aus Profilabschnitten gebildetes Rahmenwerk 40 als Träger für eine Filterdecke dient, wobei die einzelnen Abschnitte des Profilrahmenwerks 40 mittels Hängeeisen 43 an einer - nicht näher dargestellten - Oberdecke befestigt sind. Die Verschraubung der Hängeeisen 43 mit den Profilabschnitten 40 erfolgt in der üblichen Weise. Derartige Profilabschnitte 40 sind mit Dichtrinnen 41 versehen, in denen wiederum ein zähflüssiges oder erstarrtes Dichtmittel 41.1 vorgesehen ist. Um bei derartigen Deckenkonstruktionen die erfindungsgemäße Ausführung nutzen zu können, wird die Filteraufnahme 10 so ausgebildet, daß die Rahmenwände 11 in die Dichtrinnen 41 der Profilabschnitte 40 dichtend abgetaucht ist. Oberhalb der Filterzelle - im dargestellten Beispiel am oberen Ende der Rahmenwand befindet sich der obere Flansch 14, an den sich der verlängerte Dichtkragen 15.1 anschließt, der - wie vorbeschrieben - in die Dichtrinne 22 der Filterzelle 20 abgetaucht ist. Das in der Dichtrinne 22 vorhandene zähflüssige oder erstarrte Dichtmittel 22.1 sorgt hier für die Abdichtung. Im übrigen ist die Filterzelle 20 in der gleichen Weise aufgebaut: Zwischen einem oberen und einem unteren Filterpacklager 29.1 und 29.2 ist das Filterpack 26 gehalten und mit Vergußmasse 27 gegen die Zellenwände 21 gedichtet, wobei die Verstärkungsleiste 21.3 für eine gute Verankerung zwischen Dichtplatte 27 und Zellenwand 21 sorgt. Ein Steckelement 32 ist durch das verlängert ausgeführte untere Zellenlager 29.2 geführt und stützt sich auf der Auflagekante 41.2 der Dichtrinne der Profilabschnitte 40 ab. Zum Anschluß einer Filtereinheit an eine zentrale Luftversorgung ist ein Anschlußstutzen 16 vorgesehen, der in eine Deckplatte 16.2 mündet, wobei der Übergang als Einlaufdüse 16.1 ausgebildet ist. Ein derartiger Einlaufdüsenübergang hat den erheblichen Vorteil, daß die Druckdifferenz an der Einlaufdüse als Maß für den Luftstrom der der Filterzelle zugeführt wird genommen werden kann, so daß ein Abgleich der Filterzellen einer Decke vereinfacht wird. Die Filteraufnahme selbst wird mittels eines Winkels 45 am Hängeeisen 43 befestigt, wobei der Winkel 45 mit Muttern 45.1 gehalten ist.

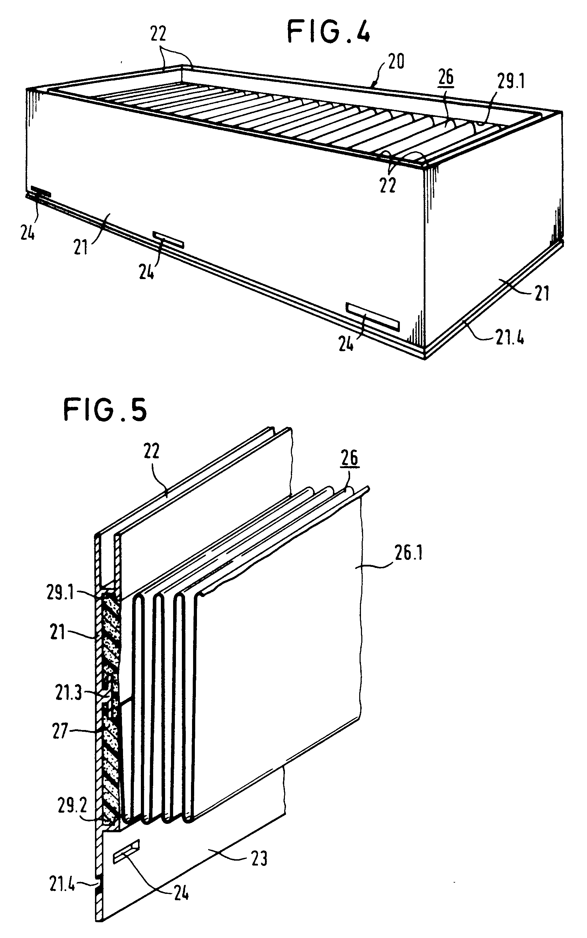

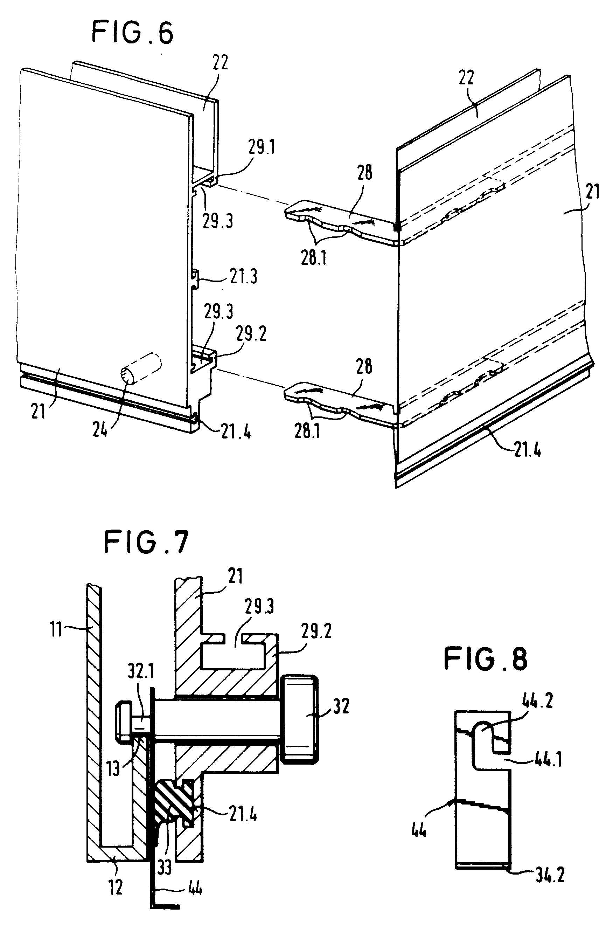

Die Fig. 4, 5 und 6 zeigen die Filterzelle 20 sowie Einzelheiten davon. Die Filterzelle 20 besteht aus einem umlaufenden Filterrahmen, der aus Seitenwänden 21 gebildet ist, die an den Eckkanten auf Gehrung geschnitten aufeinander stoßen. Die Lufteintrittsseite der (dargestellten) Filterzelle 20 ist mit einer Dichtrinne 22 versehen; es versteht sich von selbst, daß in gleicher Weise hier eine Profilgummidichtung vorgesehen sein kann. Das obere Filterpacklager 29.1 hält ebenso wie das (in dieser Darstellung nicht erkennbare) untere Filterpacklager 29.2 (Fig. 5, Fig. 6) das Filterpack 26 in seiner Position, daß an allen vier Seiten mit Vergußmasse abgedichtet mit den Seitenwänden des Filterzellenrahmens verbunden ist. Durch die Vergußmasse werden gleichzeitig die Kantenverbindungen zwischen den einzelnen Seitenwänden 21 der Filterzelle abgedichtet, so daß besondere Vorsorge für deren Dichtheit nicht getroffen werden muß. Unterhalb des Filterpacks 26 sind Ausnehmungen 24 an der längeren Seitenwand 21 der Filterzelle dargestellt, durch die flachschieberartige Steckelemente 31 (Fig. 1) geschoben werden können, die sich auf der Auflagekante 13 (Fig. 1) abstützen und so die Filterzelle in Position halten. Unterhalb dieser Ausnehmungen 24 befindet sich eine umlaufende Rinne 21.4 zur Aufnahme einer Gummidichtung. Im einzelnen ist das Filterpack 26 - wie in Fig. 5 dargestellt - aus gefaltetem Filtermedium 26.1 geformt, das zwischen dem oberen Filterpacklager 29.1 und dem unteren Filterpacklager 29.2 mittels der Dichtmasse wie vorbeschrieben befestigt ist. Unterhalb des unteren Filterpacklagers befindet sich eine abströmseitige Verlängerung 23 der Filterzellen-Seitenwand 21, in der die Ausnehmung 24 - hier für einen Flachschieber dargestellltangeordnet ist. Unterhalb dieser Ausnehmung ist wiederum die Rinne 21.4 zu erkennen, die eine umlaufende Dichtung aufnimmt. Die Seitenwände 21 werden auf Gehrung geschnitten und in einfacher Weise durch Zusammenstecken zusammengefügt, wobei Winkelprofile 28 jeweils zwei der Seitenwände 21 miteinander verbinden. Zur Aufnahme dieser Winkelprofile 28 dienen im oberen Filterpacklager 29.1 und im unteren Filterpacklager 29.2 vorgesehene Rinnen 29.3, die darüber hinaus außerhalb der Eckverbindung zur Verankerung der Dichtmasse 27 mit beitragen. Die aus Stahl gefertigten Verbindungswinkel 28 weisen seitliche Ausnehmungen 28.1 auf, durch die bei Verwendung von Aluminium-Strangpreßprofilen für die Seitenwände 21 - eine bessere Verankerung der Verbindungswinkel 28 in den Aufnahmerinnen 29.3 erreicht wird. Das untere Filterpacklager 29.2 ist hier verbreitert dargestellt, so daß die - hier für ein bolzenförmiges Steckelement dargestelllte - Ausnehmung 24 durch das untere Filterzellenlager 29.2 geführt ist. Die umlaufende Rinne 21.4 dient - wie bereits beschrieben - zur Aufnahme einer Dichtung.

Die Fig. 7 zeigt die Einzelheit am Steckelement, mit der die Filterzelle gegenüber der Filteraufnahme fixiert wird. Das - hier bolzenförmig dargestellte - Steckelement 32 ist durch das untere Filterpacklager 29.2 geführt, in dem sich dem Filterpack zugewandt die Aufnahmerinne 29.3 für die Eckverbindung des Winkel 28 befindet. Nach oben setzt sich die Seitenwand der Filterzelle 21 fort. Außerhalb der Filterzelle befindet sich die Rahmenwand 11 der Filteraufnahme 10 mit ihrer an einem Flansch vorgesehenen Auflagekante 13. Das bolzenförmige Steckelement ist durch ein, seinem Durchmesser entsprechenden Loch - entsprechend der Ausnehmung 24, Fig. 6 - durchgesteckt und stützt sich gegenüber der Auflagekante 13 ab, wobei das Steckelement 32 eine ringnutförmige Ausnehmung aufweist. Der Kern 32.1, der im Grund der Nut verbleibt, ist exzentrisch angeordnet, so daß zum Ausrichten oder - besonders bei Profildichtstreifen gewünscht - zur Korrektur der Abdichtung die Filterzelle durch Verdrehen des Steckbolzens 32 gehoben bzw. gesenkt werden kann. Die Einzelheit zeigt auf die in die Rinne 21.4 eingesetzte umlaufende Dichtung 33, die gegen die Außenseite des die Auflagekante 13 tragenden Flanschteils anliegt. Dadurch wird der als "Partikel-Reservoir" anzusehende Raum im Bereich zwischen der Aufnahmewand 11 und der Filterzellen-Seitenwand 21 zur Ausströmseite hin abgedichtet, eine Abdichtung die bei besonderen Anforderungen an Hygiene oder Partikelarmut, wie sie im medizinischen oder feinwerktechnischen Bereich gestellt wird, notwendig ist, Der eingeschobene flache Befestigungswinkel 44 ändert daranan nichts, da das von ihm verursachte "Abheben" der Dichtung auf kurze Strecken beschränkt ist. Es ist vorteilhaft die Dichtung 33 mit einer zur Luftausströmrichtung hinweisenden Lippe zu versehen. Der Befestigungswinkel 44 selbst - Fig. 8 - ist sehr einfach gebildet, er weist einen nach außen offenen Schlitz 44.1 auf, der dem Bolzendurchmesser des Steckgliedes 32 oder dem Durchmesser des Kernes 32.1 entspricht und durch den der Bolzen bzw. der Kern in seinem Sitz 44.2 geschoben werden kann. Das freie Ende 34.2 dient zur Aufnahme eines Sichtschutzgitters 46; dazu wird es um 90° umgebogen zu einem Auflagewinkel.

**Patentansprüche**

1. Filtereinheit, bestehend aus Aufnahmerahmen (10) mit von der Luftaustrittsseite her mit geringem Spiel einsetzbarer Filterzelle (20), insbesondere für Filterdecken, wobei die Filterzelle (20) einen aus vier Rahmenwänden (11) zusammengefügten Zellenrahmen aufweist, in den ein Filterpack (26) mit Vergußmasse (27) abgedichtet eingesetzt ist und der mit Dichtmittel (22.1) und mit Befestigungsmitteln zum Abdichten gegenüber und zum Befestigen am Aufnahmerahmen (10) versehen ist und wobei der Aufnahmerahmen (10) mit dem Dichtmittel und den Befestigungsmitteln der Filterzelle (20) zusammenwirkende Dichtungsgegenstücke und Befestigungsgegenlager aufweist, **dadurch gekennzeichnet,** daß das Dichtmittel der Filterzelle (20) als umlaufende, auf der lufteintrittsseitigen Stirnseite (21.1) der den Zellenrahmen bildenden Zellenseitenwände (21) angeordnete Dichtung (25) ausgebildet ist, die mit einem mit dem Aufnahmerahmen (10) verbundenen und gegen ihn abgedichteten Dichtflansch (14) zusammenwirkt und daß die Befestigungsmittel als Steckelemente (31;32) ausgebildet sind, die nahezu formschlüssig durch Öffnungen (24) in den luftabströmseitigen Verlangerungen (23) der Zellenseitenwände (21) steckbar und deren nach außen überragende Teile auf einer das Befestigungsgegenlager bildende luftaustrittsseitig am Aufnahmerahmen (10) angeordneten, zur Filterzelle (20) überstehenden Abstützkante (13) auflegbar sind, wobei die Öffnungen (24) vorzugsweise in den langen der beiden Zellenseiten (21) und zumindest nahe ihren Enden vorgesehen sind.

2. Filtereinheit nach Anspruch 1, **dadurch gekennzeichnet,** daß als umlaufende Dichtung ein Profilstreifen (25) aus elastischem Dichtungsmaterial und als Dichtflansch (14) ein rechtwinklig zu den Innenseiten des Aufnahmerahmens (10) stehender und gegen diese abgedichteter umlaufender Flansch vorgesehen sind, wobei der lichte Abstand von Auflagekante (13) zur Innenseite Dichtflansch (14) geringfügig kleiner ist als die Filterzellenhöhe zwischen Unterkante Steckelement (31;32) und Oberkante Profilstreifen (25) unter Berücksichtigung der elastischen Verformbarkeite des Profilstreifens (25).

3. Filtereinheit nach Anspruch 2, **dadurch gekennzeichnet,** daß der Profilstreifen (25) im Querschnitt ein dachförmiges Profil aufweist, wobei die dem Dachfirst entsprechende Linie des Profilstreifens (25) die umlaufende, mit dem Dichtflansch zusammenwirkende Dichtlinie ist.

4. Filtereinheit nach Anspruch 2, **dadurch gekennzeichnet,** daß der Dichtflansch (14) mit einem in Luftströmungsrichtung weisenden Dichtkragen (15) versehen ist, dessen freie Kante mit dem Profilstreifen (25) im Sinne einer Dichtlinie zusammenwirkt.

5. Filtereinheit nach Anspruch 1, **dadurch gekennzeichnet,** daß als umlaufende Dichtung eine Dichtrinne (22), gefüllt mit einer zähen oder erstarrenden Dichtmasse (22.1) vorgesehen ist und als Dichtflansch (14) ein rechtwinklig zur Innenseite des Aufnahmerahmens (10) stehender und gegen diesen abgedichteter umlaufender Flansch vorgesehen ist, der mit einem umlaufenden verlängerten Dichtkragen (15.1) versehen ist, der - ggf. bei verflüssigter Dichtmasse (22.1) - in die Dichtrinne (22) nach Art einer Tauchdichtung eingeführt ist, wobei der Abstand von Auflagekante (13) zu Unterkante Dichtkragen (15.1) unter Berücksichtigung der Eintauchtiefe kleiner ist als die Filterzellehöhe zwischen Unterkante Steckelement (31; 32) und Oberkante Dichtringe (22).

6. Filtereinheit nach einem der Ansprüche 1 bis 5, **dadurch gekennzeichnet,** daß das Steckelement (31) flachschierartig ausgebildet ist.

7. Filtereinheit nach einem der Ansprüche 1 bis 5, **dadurch gekennzeichnet,** daß das Steckelement (32) bolzenförmig ausgebildet ist.

8. Filtereinheit nach Anspruch 6 oder 7, **dadurch gekennzeichnet,** daß das Steckelement (31;32) eine mit der Abstützkante zusammenwirkende Nut aufweist.

9. Filtereinheit mit bolzenförmigem Steckglied nach Anspruch 8, **dadurch gekennzeichnet,** daß der im Grund der Nut verbleibende Kern (32.1) des Bolzens (32) exzentrisch angeordnet ist, so daß die Nut eine vom Drehwinkel abhängige unterschiedliche Tiefe aufweist.

10. Filtereinheit nach einem der Ansprüche 1 bis 9, **dadurch gekennzeichnet,** daß die Zellenseite (21) des Zellenrahmens eine vorzugsweise zwischen den Durchstecköffnungen (24) für die Steckelemente (31;32) und der Luftaustrittsseite angeordnete, umlaufende Nut (21.4) zum Einsetzen einer Dichtung (33)-,vorzugsweise einer Lippendichtung aufweist.

11. Filtereinheit nach einem der Ansprüche 1 bis 10, **dadurch gekennzeichnet,** daß zwischen der Außenseite des Zellenrahmens (21) und der Innenseite des Aufnahmerahmens (10) Flachhaken (44) einführbar sind, deren Hakenteil (44,44.2) am Steckelement (31;32) verhakbar ist und deren freies Ende (34.2) zur Befestigung von Sichtschutzgittern (46), Strömungsgleichrichtern o.dgl. dient, wozu es vorzugsweise mit einem rechtwinklig zur Luftaustrittsrichtung umgekanteten Auflagewinkel versehen ist.

12. Filtereinheit nach einem der Ansprüche 1 bis 11, zur Bildung einer Filterdecke mit einem aus an Hängeeisen (43) abgehängten Filteraufnahmeprofilen gebildeten Raster, wobei die aneinandergefügten Aufnahmeprofile (40) umlaufende, mit flüssigen oder erstarrten Dichtmassen (41.1.) gefüllte Dichtrinnen (41) aufweisen, **dadurch gekennzeichnet,** daß die Rahmenwände (11) des Aufnahmerahmens (10) ein umlaufendes Zusatzgehäuse bilden und mit ihren unteren freien Kanten in die Dichtrinnen (41) der Aufnahmeprofile (40) eingetaucht und mittels der Dichtmasse (41.1) abgedichtet sind, daß an diesen Rahmenwanden (11) der Dichtflansch (15) mit verlängertem Dichtkragen (15.1), der seinerseits in die Dichtrinne (22) der Filterzelle (20) abgetaucht ist, versehen ist und daß die Außenwand der Dichtrinne (41) des Aufnahmeprofils (40) die Abstützkante (41.2) für die Steckelemente (31;32) bildet.

13. Filtereinheit nach einem der Ansprüche 1 bis 12, **dadurch gekennzeichnet,** daß die luftzuströmseitige Öffnung des Aufnahmerahmens (10) mit einer Platte (16.2) abgedeckt ist und die Platte (16.2) vorzugsweise mittig einen Anschlußstutzen (16) zum Anschluß an eine Luftversorgungsleitung aufweist.

14. Filtereinheit nach Anspruch 13, **dadurch gekennzeichnet,** daß zwischen Anschlußstutzen (16) und Platte (16.2) eine Einlaufdüse (16.1) eingefügt ist.

15. Luftfilterzelle zum Einsetzen in die Filtereinheit nach einem der Ansprüche 1 bis 14, **dadurch gekennzeichnet,** daß die vier Zellenseitenwände (21) Aluminiumstrangpreßprofile sind, die auf Gehrung geschnitten zum Zellenrahmen zusammengefügt sind, wobei die Aluminiumstrangpreßprofile nach innen vorspringende Flanschen als Filterpacklagen (29.1, 29.2) aufweisen, von denen der lufteintrittsseitige Träger (29.1) der Dichtung (25) bzw. Boden der Dichtrinne (22) ist und von denen der andere (29.2) im Abstand der Filterpack-Tiefe vor dem ersten angeordnet ist, daß zwischen den Filterpacklagen (29.1, 29.2) mindestens eine Verankerungsleiste (21.3) vorgesehen ist und daß in der luftabströmseitig vorgesehenen luftaustrittsseitigen Verlängerung der Zellenseitenwand (21) die Öffnungen (24) für die Steckelemente und die nach außen offene Nut (21.4) für den Dichtstreifen (33) vorgesehen sind.

16. Filterzelle nach Anspruch 15, **dadurch gekennzeichnet,** daß die abströmseitige Filterpacklage (29.2) in Abströmrichtung derart verlängert ist, daß die Öffnungen (24) für die Steckelemente (31,32) durch diese Filterpacklagen geführt sind.

17. Filterzelle nach Anspruch 15, **dadurch gekennzeichnet,** daß die beiden Filterpacklagen (29.1, 29.2), zwischen denen das Filterpack (26) angeordnet ist, auf den einander zugewandten Seiten je eine durchlaufende T-Führung (29.3) aufweisen, in die Verbindungswinkel (28) vorzugsweise aus Stahl eingeführt sind, deren Schmalseiten Verankerungs-Ausnehmungen (28.1) aufweisen.

## Claims

1. Filter unit consisting of a receptacle frame (10) with a filter cell (20), which is insertable with little play from the air exit side, in particular for filter ceilings, wherein the filter cell (20) displays a cell frame, which is assembled from four frame walls (11) and into which a filter pack (26) sealed off by sealing compound (27) is inserted and which is provided with sealing means (22.1) and with fastening means for the sealing relative to and the fastening at the receptacle frame (10), wherein the receptacle frame (10) displays sealing countermembers and fastening counterbearings respectively cooperating with the sealing means and the fastening means of the filter cell (20), characterised thereby, that the sealing means of the filter cell (20) is constructed as an encircling seal (25), which is arranged on the end face (21.1) at the air entry side of the cell side walls (21) forming the cell frame and co-operates with a sealing flange (14), which is connected with the receptacle frame (10) and sealed off against it, and that the fastening means are constructed as plug elements (31; 32), which are pluggable almost shape-lockingly through openings (24) in the prolongations (23) at the air outflow side of the cell side walls (21) and the outwardly protruding parts of which are layable onto a support edge (13), which forms the fastening counterbearing, is arranged at the receptacle frame (10) on the air exit side and protrudes towards the filter cell (20), wherein the openings (24) are preferably provided in the long ones of both the cell sides (21) and at least close to their ends.

2. Filter unit according to claim 1, characterised thereby, that a profile strip (25) of elastic sealing material is provided as encircling seal and an encircling flange, which stands at right angles to the inward sides of the receptacle frame (10) and is sealed off against this, is provided as sealing flange (14), wherein the clear spacing from the bearing edge (13) to the inward side of the sealing flange (14) is slightly smaller than the filter cell height between the lower edge of the plug element (31; 32) and the upper edge of the profile strip (25) subject to consideration of the elastic deformability of the profile strip (25).

3. Filter unit according to claim 2, characterised thereby, that the profile strip (25) displays a roof-shaped profile in cross-section, wherein that line of the profile strip (25), which corresponds to the ridge, is the encircling sealing line co-operating with the sealing flange.

4. Filter unit according to claim 2, characterised thereby, that the sealing flange (14) is provided with a sealing collar (15), which points in the direction of air flow and the free edge of which cooperates with the profile strip (25) in the sense of a sealing line.

5. Filter unit according to claim 1, characterised thereby, that a sealing groove (22), filled with a viscous or rigidifying sealing mass (22.1), is provided as encircling seal and an encircling flange, which stands at right angles to the inward sides of the receptacle frame (10) and is sealed off against this and which is provided with an encircling prolonged sealing collar (15.1), which - in a given case when the sealing mass (22.1) is liquefied - is introduced into the sealing groove (22) in the manner of a dip seal, is provided as sealing flange (14), wherein the spacing from the bearing edge (13) to the lower edge of the sealing collar (15.1) is, subject to consideration of the depth of entry, smaller than the filter cell height between the lower edge of the plug element (31; 32) and the upper edge of sealing rings (22).

6. Filter unit according to one of the claims 1 to 5, characterised thereby, that the plug element (31) is constructed in the manner of a flat slide bar.

7. Filter unit according to one of the claims 1 to 5, characterised thereby, that the plug element (32) is constructed in pin shape.

8. Filter unit according to claim 6 or 7, characterised thereby, that the plug element (31; 32) displays a groove co-operating with the support edge.

9. Filter unit with pin-shaped plug member according to claim 8, characterised thereby, that the core (32.1), which remains in the base of the groove, of the pin (32) is arranged eccentrically so that the groove displays a depth varying in dependence on the angle of rotation.

10. Filter unit according to one of the claims 1 to 9, characterised thereby, that the cell side (21) of the frame displays an encircling groove (21.4), which is preferably arranged between the bushing openings for the plug elements (31; 32) and the air exit side, for the insertion of a seal (33), preferably a lip seal.

11. Filter unit according to one of the claims 1 to 10, characterised thereby, that flat hooks (44), the hook part (44, 44.2) of which is hookable to the plug element (31; 32) and the free end (34.2) of which serves for the fastening of camouflage gratings (46), flow-straightening devices or the like, are introduceable between the outward side of the cell frame (21) and the inward side of the receptacle frame (10), for which the free end is preferably provided with a bearing bracket bent over at right angles to the air exit direction.

12. Filter unit according to one of the claims 1 to 11, for the formation of a filter ceiling with a screen formed of filter receptacle profiles suspended at iron hangers (43), wherein the receptacle profiles (40) are placed one against the other and display encircling sealing grooves (41) filled with liquid or rigidified sealing masses (41.1), characterised thereby, that the frame walls (11) of the receptacle frame (10) form an encircling additional housing, are immersed by their lower free edges into the sealing grooves (41) of the receptacle profiles (40) and sealed off by means of the sealing mass (41.1), that the sealing flange (15) with prolonged sealing collar (15.1), which in its turn is disposed into the sealing groove (22) of the filter cell (20), is provided at these frame walls (11) and that the outward wall of the sealing groove (41) of the receptacle profile (40) forms the support edge (41.2) for the plug elements (31; 32).

13. Filter unit according to one of the claims 1 to 12, characterised thereby, that the opening of the receptacle frame (10) at the air inflow side is covered by a plate (16.2) and the plate (16.2) displays a preferably central connecting nipple (16) for connection to an air supply duct.

14. Filter unit according to claim 13, characterised thereby, that an inlet nozzle (16.1) is inserted between the connecting nipple (16) and the plate (16.2).

15. Air filter cell for insertion into the filter unit according to one of the claims 1 to 14, characterised thereby, that the four cell side walls (21) are extruded aluminium profiles which are cut to mitre and assembled into the cell frame, wherein the extruded aluminium profiles display inwardly projecting flanges as filter pack layers (29.1, 29.2), of which the one at the air entry side is either carrier (29.1) of the seal (25) or base of the sealing groove (22) and the other (29.2) is arranged in front of the first at the spacing of the filter pack depth, that at least one anchoring strip (21.3) is provided between the filter pack layers (29.1, 29.2) and that the openings (24) for the plug elements and the outwardly open groove (21.4) for the sealing strip (33) are provided in the prolongation provided at the air exit side of the cell side wall (21).

16. Filter cell according to claim 15, characterised thereby, that the filter pack layer (29.2) at the outflow side is prolonged in outflow direction in such a manner that the openings (24) for the plug elements (31; 32) are led through these filter pack layers.

17. Filter cell according to claim 15, characterised thereby, that both the filter pack layers (29.1, 29.2), between which the filter pack (26) is arranged, each on the mutually facing sides display a respective continuous T-guide (29.3), into which the connecting brackets (28) are introduced, which are preferably of steel and the narrow sides of which display anchoring recesses (28.1).

**Revendications**

1. Unité de filtre constituée par un cadre de réception (10) muni d'une cartouche filtrante (20) apte à venir s'insérer avec un jeu minime du côté orienté vers la sortie d'air, en particulier pour des plafonds filtrants, la cartouche filtrante (20) présentant un cadre de filtre assemblé à partir de quatre parois de cadre (11), dans lequel est inséré un paquet de filtres (26) de manière étanche à l'aide d'une matière de remplissage (27) et qui est muni d'un agent d'étanchéification (22.1) et d'agents de fixation à des fins d'étanchéification vis-à-vis du cadre de réception (10) et à des fins de fixation à ce dernier, et dans laquelle le cadre de réception (10) présente des pendants d'étanchéification et des butées de fixation coopérant avec l'agent d'étanchéification et les agents de fixation de la cartouche filtrante (20), caractérisée en ce que l'agent d'étanchéification de la cartouche filtrante (20) est réalisé en un joint périphérique (25) disposé sur le côté frontal (21.1) des parois latérales de la cartouche formant le cadre de cette dernière orienté vers l'entrée d'air, le joint coopérant avec une bride d'étanchéification (14) reliée au cadre de réception (10) et rendue étanche vis-à-vis de ce dernier et en ce que les agents de fixation sont réalisés en éléments d'enfichage (31, 32) qui peuvent s'enficher de manière pratiquement mécanique à travers des ouvertures (24) pratiquées dans les prolongements (23) des parois latérales (21) de la cartouche du côté orienté vers la sortie d'air et dont les parties faisant saillie vers l'extérieur peuvent venir s'appuyer sur une arête de support (13) formant la butée de fixation, faisant saillie par rapport à la cartouche filtrante (20) et disposée contre le cadre de réception (10) du côté orienté vers la sortie d'air, dans laquelle les ouvertures (24) sont prévues de préférence dans les deux grands côtés de la cartouche (21) et au moins à proximité des extrémités de ces derniers.

2. Unité de filtre selon la revendication 1, caractérisée en ce que, comme joint périphérique, on prévoit une bande profilée (25) en une matière élastique d'étanchéification et, comme bride d'étanchéification (14), on prévoit une bride qui se dresse perpendiculairement aux côtés internes du cadre de réception (10) en les entourant de manière étanche, l'écartement entre l'arête de support (13) et la bride d'étanchéification (14) du côté interne étant légèrement inférieur à la hauteur de la cartouche filtrante entre l'élément d'enfichage (31, 32) du bord inférieur et la bande profilée (25) du bord supérieur, en prenant en compte l'aptitude à la déformation manifestée par la bande profilée (25).

3. Unité de filtre selon la revendication 2, caractérisée en ce que la bande profilée (25) présente, en section transversale, un profil en forme de toit, la ligne de la bande de profilé (25) correspondant à l'arête du toit étant la ligne d'étanchéification périphérique coopérant avec la bride d'étanchéification.

4. Unité de [titre selon la revendication 2, caractérisée en ce que la bride d'étanchéification (14) est munie d'un collet d'étanchéification (15) orienté en direction de l'écoulement de l'air, dont l'arête libre coopère avec la bande profilée (25) dans le sens d'une ligne d'étanchéification.

5. Unité de filtre selon la revendication 1, caractérisée en ce que, comme joint périphérique, on prévoit une rigole d'étanchéification (22) remplie d'une matière d'étanchéification (22.1) dure ou durcissante et, comme bride d'étanchéification (14), on prévoit une bride se dressant perpendiculairement aux côtés internes du cadre de réception (10) et entourant ce dernier de manière étanche, qui est munie d'un collet d'étanchéification périphérique (15.1) prolongé qui est introduit - éventuellement dans le cas d'une matière d'étanchéification liquéfiée (22.1) - dans la rigole d'étanchéification (22) à la manière d'une étanchéification par immersion, l'écartement entre l'arête de support (13) et le collet d'étanchéification (15.1) du bord inférieur étant, en prenant en compte la profondeur d'immersion, inférieur à la hauteur de la cartouche filtrante comprise entre l'élément d'enfichage (31, 32) du bord inférieur et la bague d'étanchéification (22) du bord supérieur.

6. Unité de filtre selon l'une quelconque des revendications 1 à 5, caractérisée en ce que l'élément d'enfichage (31) est réalisé à la façon d'un tiroir aplati.

7. Unité de filtre selon l'une quelconque des revendications 1 à 5, caractérisée en ce que l'élément d'enfichage (32) est réalisé en forme de boulon.

8. Unité de filtre selon la revendication 6 ou 7, caractérisée en ce que l'élément d'enfichage (31, 32) présente une rainure coopérant avec l'arête de support.

9. Unité de filtre à élément d'enfichage en forme de boulon selon la revendication 8, caractérisée en ce que le coeur (32.1) du boulon (32) subsistant à la base de la rainure est disposé de manière excentrique, de telle sorte que la rainure présente une profondeur différente en fonction de l'angle d'orientation.

10. Unité de filtre selon l'une quelconque des revendications 1 à 9, caractérisée en ce que le côté (21) du cadre de la cartouche tourné vers cette dernière présente une rainure périphérique (21.4) disposée de préférence entre les ouvertures traversantes (24) destinées aux éléments d'enfichage (31, 32) et le côté orienté vers la sortie d'air pour l'introduction d'un joint (33), de préférence d'un joint à lèvre.

11. Unité de filtre selon l'une quelconque des revendications 1 à 10, caractérisée en ce qu'entre le côté externe du cadre de cartouche (21) et le côté interne du cadre de réception (10), on peut insérer des crochets plats (44,) dont la partie en forme de crochet (44, 44.2) peut venir s'accrocher à l'élément d'enfichage (31, 32) et dont l'extrémité libre (34.2) sert à la fixation de grilles (46) de visualisation et de protection, de redresseurs de courant, ou analogues; à cet effet, elle est munie, de préférence d'une cornière de support pliée en position rectangulaire par rapport à la direction de sortie d'air.

12. Unité de filtre selon l'une quelconque des revendications 1 à 11 pour former un plafond filtrant équipé de grilles formées à partir de profilés de réception de filtres suspendus à des étriers (43), les profilés de réception (40) mutuellement assemblés présentant des rigoles périphériques d'étanchéification (41) remplies d'une matière d'étanchéification (41.1) liquide ou durcie, caractérisé en ce que les parois de cadre (11) du cadre de réception (10) forment un logement périphérique supplémentaire, viennent s'immerger avec leurs arêtes libres inférieures dans les rigoles d'étanchéification (41) des profilés de réception (40) et sont rendues étanches au moyen de la matière d'étanchéification (41.1), en ce que, contre ces parois de cadre (11), la bride d'étanchéification (15) est munie d'un collet prolongé d'étanchéification (15.1) qui, à son tour, est rendu étanche par immersion dans la rigole d'étanchéification (22) de la cartouche filtrante (20) et en ce que la paroi externe de la rigole d'étanchéification (41) du profilé de réception (40) forme l'arête de support (41.2) pour les éléments d'enfichage (31, 32).

13. Unité de filtre selon l'une quelconque des revendications 1 à 12, caractérisée en ce que l'ouverture du cadre de réception (10) orientée vers l'entrée d'air est recouverte d'une plaque (16.2) et la plaque (16.2) présente, de préférence en son centre une tubulure de raccordement (16) pour le raccordement à une canalisation d'alimentation d'air.

14. Unité de filtre selon la revendication 13, caractérisée en ce que, entre la tubulure de raccordement (16) et la plaque (16.2), vient s'encastrer une buse d'entrée (16.1).

15. Cartouche filtrante pour l'air destinée à venir s'insérer dans l'unité de filtre selon l'une quelconque des revendications 1 à 14, caractérisée en ce que les quatre parois latérales (21) de la cartouche sont des profilés en aluminium extrudé qui sont assemblés en un cadre de cartouche par un assemblage à onglet, les profilés en aluminium extrudé présentant des brides faisant saillie vers l'intérieur et faisant office de logements (29.1, 29.2) pour les paquets de filtres, dont celle se trouvant du côté tourné vers l'entrée d'air constitue le support (29.1) du joint (25) ou le fond de la rigole d'étanchéification (22) et dont l'autre (29.2) est disposée devant la première avec un écart correspondant à la profondeur du paquet de filtres, en ce que, entre les logements (29.1, 29.2) pour les paquets de filtres, on prévoit au moins une nervure d'ancrage (21.3) et en ce qu'on prévoit les ouvertures pour les éléments d'enfichage et la rainure (21.4) ouverte vers l'extérieur destinée à la bande d'étanchéification (33) dans le prolongement de Ta paroi latérale (21) de la cartouche du côté orienté vers la sortie d'air, le prolongement étant prévue du côté tourné vers l'évacuation de l'air.

16. Cartouche filtrante selon la revendication 15, caractérisée en ce que le logement (29.2) pour les paquets de filtres disposé du côté tourné vers l'évacuation de l'air est prolongé en direction de l'évacuation de l'air, de telle sorte que Tes ouvertures (24) destinées aux éléments d'enfichage (31, 32) sont guidées par ces logements pour les paquets de filtres.

17. Cartouche filtrante selon la revendication 15, caractérisée en ce que les deux logements (29.1, 29.2) pour les paquets de filtres entre lesquels est disposé le paquet de filtres (26), présentent chacun, sur les côtés mutuellement opposés, un guidage périphérique en T (29.3) dans lequel viennent s'insérer des cornières de liaison (28) de préférence en acier, dont les petits côtés présentent des évidements d'ancrage (28.1).

## FIG.1

## FIG.2

# FIG.3

# FIG.4

# FIG.5

## FIG.6

## FIG.7

## FIG.8